Europäisches Patentamt

European Patent Office

Office européen des brevets

(19)

(11) **EP 1 141 442 B1**

(12) **FASCICULE DE BREVET EUROPEEN**

(45) Date de publication et mention
de la délivrance du brevet:
**19.02.2003 Bulletin 2003/08**

(21) Numéro de dépôt: **99958338.8**

(22) Date de dépôt: **15.12.1999**

(51) Int Cl.$^7$: **C23C 18/16**, C23C 18/44,
C23C 18/34, F01D 5/28

(86) Numéro de dépôt international:
**PCT/FR99/03154**

(87) Numéro de publication internationale:
**WO 00/036181 (22.06.2000 Gazette 2000/25)**

(54) **PROCEDE POUR PRODUIRE UNE POUDRE D'ALLIAGE METALLIQUE DE TYPE MCrAlY ET REVETEMENTS OBTENUS AVEC CETTE POUDRE**

VERFAHREN ZUR HERSTELLUNG EINES METALLEGIERUNGSPULVERS VOM TYP MCrAlY UND NACH DIESEM VERFAHREN ERHALTENE ÜBERZÜGE

METHOD FOR PRODUCING A METAL ALLOY POWDER SUCH AS MCrAlY AND COATINGS OBTAINED WITH SAME

(84) Etats contractants désignés:
**AT BE CH CY DE DK ES FI FR GB GR IE IT LI LU MC NL PT SE**

(30) Priorité: **16.12.1998 FR 9815889**

(43) Date de publication de la demande:
**10.10.2001 Bulletin 2001/41**

(73) Titulaire: **ONERA (Office National d'Etudes et de Recherches Aérospatiales)
92320 Châtillon (FR)**

(72) Inventeurs:
• **BACOS, Marie Pierre
F-92160 Antony (FR)**
• **JOSSO, Pierre
F-92130 Issy-les-Moulineaux (FR)**

(74) Mandataire: **Rousset, Jean-Claude et al
Cabinet Netter
36, avenue Hoche
75008 Paris (FR)**

(56) Documents cités:
**US-A- 3 918 139**

EP 1 141 442 B1

Printed by Jouve, 75001 PARIS (FR)

**Description**

L'invention concerne un procédé pour produire une poudre d'un alliage métallique contenant du nickel et/ou du cobalt, du chrome, de l'aluminium et de l'yttrium sous forme d'une phase γ et d'une phase β dispersée dans la phase γ, propre à former à partir de la phase β, par exposition à l'air à température élevée, une barrière superficielle adhérente d'alumine.

Il est connu de protéger contre la corrosion et/ ou l'oxydation des pièces métalliques travaillant à des températures élevées, notamment des aubes de turbines aéronautiques, par différents revêtements obtenus par diffusion (essentiellement à base d'aluminiure de nickel β-NiAl, éventuellement modifiés par des éléments additionnels). Ces revêtements présentent de nombreux avantages mais ils sont limités en composition. Pour certaines applications le revêtement "idéal" peut avoir une composition chimique impossible à obtenir par diffusion. C'est pourquoi la projection d'alliages tels que ceux désignés par la formule qualitative MCrAlY (avec M = Ni et/ou Co et/ou Fe) a été étudiée au moyen de techniques de dépôt physique. Ces techniques permettent d'ajouter dans le dépôt à l'état de traces (jusqu'à 2 %) des éléments dits "actifs" tels que l'yttrium, le hafnium, le tantale et le zirconium.

Un exemple typique d'un revêtement de MCrAlY est constitué par un alliage à base de nickel contenant 20 % en poids de cobalt, permettant d'éviter la réaction:

$$\gamma\text{-Ni} + \beta\text{-NiAl} \rightarrow \gamma'\text{-Ni}_3\text{Al} + \alpha\text{-Cr},$$

possible dès 1 000 °C, 20 à 25 % de chrome pour le renforcement de la résistance à la corrosion de type I, 6 à 8 % d'aluminium (élément aluminoformeur) et environ 0,5 % d'yttrium, qui renforce l'adhérence de la couche d'alumine à l'alliage aluminoformeur. Sa microstructure générale est celle d'un alliage biphasé contenant des précipités de β-NiAl (phase aluminoformeuse) dans une matrice γ. Selon les conditions d'utilisation, d'autres éléments peuvent être ajoutés, et/ou les concentrations ci-dessus modifiées. Par exemple, si ce revêtement est destiné à lutter contre la corrosion à chaud de type II en présence de vanadium, la concentration en chrome peut dépasser 30 % en masse. De nombreuses compositions de MCrAlY sont disponibles commercialement, les plus utilisées étant celles connues sous les dénominations AMDRY 997 (NiCoCrAlYTa) et AMDRY 995 (CoNiCrAlYTa).

Un aspect particulièrement intéressant de ces alliages protecteurs est la possibilité d'y ajouter des éléments actifs. L'addition, en faible quantité (de l'ordre de 1 % atomique ou moins), d'éléments tels que Y et Hf améliore de façon très nette l'adhésion de couches de $Cr_2O_3$ ou d'$Al_2O_3$ sur les alliages en question. De ce fait, l'effet protecteur de la couche d'oxyde est conservé sur des durées importantes, notamment dans des conditions de cyclage thermique.

Parmi les techniques de dépôt physique évoquées ci-dessus pour l'obtention de revêtements MCrAlY on peut citer notamment la projection à chaud et plus particulièrement la projection plasma, dans laquelle le matériau à déposer est introduit, au moyen d'un gaz porteur, dans le jet d'une torche à plasma sous forme de grains de poudre de 20 à 100 μm de diamètre. Après fusion, les gouttelettes du matériau devenu liquide sont projetées à grande vitesse sur la surface du substrat. La flamme-plasma résulte de la détente à grande vitesse dans une anode-tuyère d'un gaz plasmagène (Ar + 10 % $H_2$, par exemple) ionisé lors de son passage dans une chambre à arc. On peut ainsi déposer à la surface d'un substrat quelconque tout matériau disponible en poudre pouvant être fondu sans décomposition ni évaporation. Cette projection peut se faire soit à la pression atmosphérique (à l'air ou en atmosphère neutre), soit sous pression réduite. Dans tous les cas le revêtement s'élabore à grande vitesse, typiquement 100 μm/min. Cette technique de dépôt est fortement directionnelle et donc difficile à mettre en oeuvre pour des pièces de forme complexe.

C'est essentiellement la projection plasma sous pression réduite qui est utilisée pour le dépôt d'alliages de type MCrAlY. Le dispositif de projection est installé dans une enceinte dans laquelle on pratique une forte dépression (P = 0,05 bar). Ceci permet d'éviter l'oxydation des particules d'alliage projetées, d'augmenter la vitesse des gaz dans le jet plasma et d'allonger la flamme ce qui augmente la vitesse d'impact des particules fondues et, par voie de conséquence, diminue la porosité. Enfin, il faut noter que cette technique autorise un décapage ionique initial en polarisant la surface du substrat ce qui augmente l'adhésion du revêtement sur le substrat. Les dépôts obtenus sont adhérents et faiblement tendus et peuvent être très épais (quelque millimètres). Après projection les revêtements MCrAlY sont diffusés lors d'un traitement thermique sous vide. Ils sont cependant rugueux et nécessitent un usinage post-opératoire suivi d'une tribo-finition.

On peut mentionner également une technique de projection à haute vitesse à la flamme réalisée en faisant réagir un carburant (hydrocarbure et/ou hydrogène) et un comburant (air reconstitué par mélange azote + oxygène, ou oxygène pur).

Une autre catégorie de techniques de dépôt physique est celle des dépôts physiques en phase vapeur, qui comprennent la pulvérisation cathodique triode et l'évaporation sous faisceau d'électrons.

Pour la pulvérisation cathodique triode, un système à trois électrodes polarisées à quelques kilovolts placé dans une enceinte où règne un vide d'environ $10^{-2}$ Pa permet de déposer à une vitesse comprise entre 5 et 25 μm/h des alliages MCrAlY extrêmement adhérents, non poreux et moins directionnels que dans le cas de la projection plasma.

Pour l'évaporation sous faisceau d'électrons, dans une enceinte maintenue sous un vide meilleur que $10^{-4}$ Pa, un faisceau d'électrons est focalisé à la surface du matériau à déposer contenu dans un creuset métallique refroidi. Un système d'approvisionnement en continu du lingot permet de conserver constant le niveau du bain liquide et de maintenir les conditions de dépôt stationnaires. Les vapeurs émises se condensent sur le substrat placé en regard du bain liquide. Ce substrat est maintenu à température suffisamment élevée pour minimiser les défauts inhérents à la croissance colonnaire du dépôt. Ces défauts sont par la suite éliminés par un grenaillage suivi d'un traitement thermique de diffusion et d'élimination des tensions. Les vitesses de dépôt peuvent atteindre jusqu'à 25 μm/min. Cette technique est décrite dans US 5 698 273 A. Elle a été essentiellement développée pour le dépôt de MCrAlY sur des aubes de turbomachines. Son développement est cependant limité du fait de son coût d'investissement et d'exploitation. De plus, ce procédé très directionnel ne permet pas d'obtenir aisément certaines compositions de revêtement (cas des alliages comprenant des éléments à tension de vapeur très différente).

En revanche, il permet de réaliser l'ensemble revêtement protecteur + barrière thermique (zircone partiellement stabilisée à l'yttrine $ZrO_2$ + 8 % $Y_2O_3$), cette dernière possédant de meilleures propriétés mécaniques et une meilleure tenue aux chocs thermiques que celle obtenue par projection plasma.

Le dépôt électrolytique de l'alliage MCrAlY(Ta) est impossible car il supposerait le dépôt conjoint en milieu aqueux (l'eau n'est plus stable au delà de -1 V par rapport à l'électrode normale à hydrogène) de nickel (E0 = -0,44 V), de cobalt (E0 = -0,28 V), de chrome (E0 = -0,744 V), d'aluminium (E0 = -1,662 V), d'yttrium (E0 = -2,372 V) et le cas échéant de tantale (E0 = -0,750 V). Pour obtenir un dépôt de MCrAlY par électrochimie il faudra donc réaliser un dépôt composite comprenant d'une part du nickel et/ou du cobalt, d'autre part des particules de CrAlY, et ensuite faire diffuser l'ensemble dépôt électrolytique + particules + substrat à haute température (typiquement 2 heures à 1100 °C). Des exemples de mise en oeuvre sont décrits dans US 4 305 792 A, US 4 810 334 A et 5 037 513 A.

À défaut de dépôt électrolytique, il est possible de faire migrer des particules dans un champ électrique important (typiquement 100 V). Le milieu de dépôt choisi doit avoir une constante diélectrique élevée et présenter une grande stabilité électrochimique. C'est l'électrophorèse. Couramment utilisées pour la peinture des automobiles, cette technique permet le dépôt de particules métalliques ou non. Cependant le dépôt obtenu est poreux, friable et peu adhérent. Il doit alors être consolidé par un second dépôt faisant appel à un procédé classique.

Lorsque le revêtement de MCrAlY est soumis à un environnement oxydant, sa phase β s'oxyde (et par voie de conséquence s'appauvrit en aluminium) pour former une couche d'alumine stable et étanche. La quantité de phase β disponible diminue à mesure que cet aluminium est consommé pour disparaître tout à fait au terme de quelque centaines d'heures. Dès lors la protection du revêtement est assurée par l'étanchéité de la couche d'alumine formée vis-à-vis de l'oxygène et par son ancrage dans le revêtement protecteur. Si, par accident, cette couche céramique disparaissait, le revêtement ne serait plus en mesure de la reformer.

Dans le cas de revêtements obtenus par dépôt électrolytique composite, on remarquera que la matrice a une composition limitée: nickel, cobalt ou nickel-cobalt. Les ajouts doivent alors être introduits dans la poudre codéposée. Cette opération nécessite l'élaboration d'un nouvel alliage et sa pulvérisation, ce qui représente une longue suite d'opérations fastidieuses et coûteuses. La consolidation des dépôts électrophorétiques se fait par l'intermédiaire d'un dépôt en phase vapeur à haute température ou par fusion d'une des poudres déposées. De ce fait la flexibilité de la composition du revêtement sera dépendante de la quantité d'aluminium admissible dans l'alliage MCrAlY (équilibre β-γ) ou de la composition de la poudre de brasure utilisée.

Dans le cas des dépôts par projection plasma ou à la flamme, cette composition est essentiellement dépendante de la composition de la poudre utilisée. Les modifications de composition nécessitent alors l'étude et la réalisation d'un nouveau lot de poudre, opération qui, comme chacun sait, est longue et fastidieuse.

Enfin, dans le cas où le revêtement doit supporter une barrière thermique, les procédés connus ne permettent pas de favoriser l'adhérence de cette dernière à la couche d'oxyde ($Al_2O_3$) formée à la surface du MCrAlY.

Le but de l'invention est de remédier à tout ou partie de ces inconvénients.

L'invention vise notamment un procédé du genre défini en introduction, et prévoit qu'il comprend l'étape consistant à réaliser, sur une poudre d'un alliage précurseur contenant au moins les éléments Cr, Al et Y, en utilisant un bain de dépôt chimique ou électrolytique, un dépôt contenant au moins un élément modificateur propre à étendre le domaine d'existence de ladite phase β et/ou à augmenter la finesse de sa dispersion.

La poudre ainsi obtenue peut notamment être utilisée, comme on le verra en détail plus loin, pour former un revêtement protecteur de type MCrAlY. L'extension du domaine d'existence de la phase β due à l'élément modificateur permet à celle-ci de subsister après une forte consommation d'aluminium et par conséquent de régénérer si nécessaire la couche d'alumine. Une dispersion plus fine de cette même phase améliore l'ancrage de la couche d'alumine dans le revêtement de MCrAlY.

Des caractéristiques optionnelles de l'invention, complémentaires ou alternatives, sont énoncées ci-après:

- L'élément modificateur est choisi parmi le platine, le palladium, le ruthénium, le rhodium, l'osmium, l'iridium, le fer, le manganèse et le rhénium.

- Ledit bain est un bain chimique autocatalytique contenant des ions oxalate, des ions de l'élément modificateur et un complexant de ces derniers.

- L'élément modificateur est choisi parmi le platine et le palladium, ledit complexant est l'éthylènediamine et le bain est fortement basique et contient en outre au moins un stabilisant, de l'hydrazine y étant introduite progressivement comme réducteur.

- Ledit bain est un bain aqueux chimique autocatalytique de pH compris entre 8,5 et 14, dont les espèces dissoutes ont la composition initiale suivante en moles/litre:

| | |
|---|---|
| ions palladium | 0,01 à 0,3 |
| ions chlorure | 0,01 à 0,5 |
| éthylènediamine | 1 à 4 |
| pentoxyde d'arsenic | $10^{-4}$ à $10^{-2}$ |
| ou sulfate de cuivre | $10^{-5}$ à $10^{-3}$ |
| ou iodate de potassium | $10^{-6}$ à $10^{-3}$ |
| imidazole | 0,2 à 0,6, |

la quantité d'éthylènediamine étant suffisante pour complexer la totalité des ions palladium et pour se combiner en outre aux ions chlorure en évitant la présence d'ions chlorure libres au voisinage des particules à revêtir.

- L'élément modificateur est déposé, au moins en partie, sous forme de particules de cet élément ou d'un composé de celui-ci en suspension dans une solution de dépôt, lesdites particules étant incluses dans une matrice déposée à partir d'ions contenus dans la solution.

- Ledit composé est un siliciure.

- La solution de dépôt contient des ions nickel et/ou cobalt, un composé d'un élément fondant choisi parmi le bore et le phosphore y étant introduit progressivement en tant que réducteur, et la matrice contient du nickel et/ou du cobalt combiné à l'élément fondant.

- La solution de dépôt contient en outre au moins un complexant desdits ions nickel et/ou cobalt et au moins un stabilisant organique soluble dans l'eau ne contenant ni soufre ni aucun métal ou métalloïde des groupes IIIa (bore et aluminium exceptés), IVa (carbone excepté), Va (azote et phosphore exceptés), VIa (oxygène excepté) et VIIa (fluor et chlore exceptés), et possédant un doublet électronique pouvant être facilement capté par le nickel et/ou le cobalt.

- L'étape de dépôt de l'élément modificateur est précédée ou suivie par une étape complémentaire consistant à déposer du nickel et/ou du cobalt sur une poudre contenant au moins les éléments Cr, Al et Y, à partir d'un bain de dépôt autocatalytique contenant des ions nickel et/ou cobalt, la poudre résultant de la première desdites étapes servant de substrat pour la seconde étape.

- Dans l'étape complémentaire, ledit bain contient de l'hydroxyde de nickel-II tri(éthylènediamine) et/ou de l'hydroxyde de cobalt-II tri(éthylènediamine) et au moins un stabilisant, l'éthylènediamine jouant le rôle de complexant et de l'hydrazine y étant introduite progressivement comme réducteur.

- Dans l'étape de dépôt de l'élément modificateur et le cas échéant dans l'étape complémentaire, on met la poudre à traiter en suspension, avec agitation, dans le bain de dépôt.

- La suspension agitée est contenue dans un récipient dont la paroi en contact avec elle est sensiblement sphérique.

L'invention a également pour objet une poudre d'alliage métallique telle qu'on peut l'obtenir par le procédé défini ci-dessus, ce qui inclut aussi bien une poudre effectivement obtenue par ce procédé qu'une poudre obtenue par une voie différente mais présentant les mêmes caractéristiques que la précédente. En particulier, une telle poudre contient du nickel et/ou du cobalt, du chrome, de l'aluminium et de l'yttrium sous forme d'une phase γ et d'une phase β dispersée dans la phase γ, propre à former à partir de la phase β, par exposition à l'air à température élevée, une barrière superficielle adhérente d'alumine, et contient en outre au moins un élément modificateur propre à étendre le domaine d'existence de ladite phase β et/ou à augmenter la finesse de sa dispersion.

L'invention prévoit encore l'utilisation de la poudre précitée pour former sur un substrat métallique un revêtement à base dudit alliage.

L'utilisation selon l'invention peut comporter au moins certaines des particularités suivantes:

- On fait fondre les grains de ladite poudre, et on projette les gouttelettes résultantes sur le substrat pour former le revêtement, au moyen d'une torche à plasma.

- On forme ledit revêtement par électrophorèse dans un milieu contenant ladite poudre en suspension et contenant un agent d'adhésion propre à permettre l'agglomération des grains de poudre déposés sur le substrat, après quoi on effectue un traitement de consolidation du revêtement.

- Ledit traitement de consolidation comporte la fusion du dépôt composite présent sur les grains de poudre.

- On forme au moins une plaque en préfrittant ladite poudre, par fusion du dépôt composite présent sur les grains de poudre, on applique ladite plaque sur ledit substrat avec interposition d'une couche de colle et on effectue un traitement thermique de diffusion entre le revêtement et le substrat.

- On forme au moins deux plaques en préfrittant des poudres ayant des compositions différentes d'une plaque à l'autre, et on superpose lesdites plaqués entre elles et sur ledit substrat avec interposition de couches de colle, pour obtenir après ledit traitement thermique de diffusion un revêtement présentant un gradient de composition.

- On forme ledit revêtement par une technique de dépôt physique en phase vapeur à partir d'une source elle-même obtenue par liaison des grains de ladite poudre.

- On forme le revêtement par évaporation sous faisceau d'électrons.

- Ladite source comprend, outre l'alliage constitutif de la poudre, un élément céramique assemblé à l'élément métallique par un ciment de scellement comportant une couche médiane de mullite reliée à l'élément céramique par une couche de transition dont la composition chimique évolue progressivement, avec continuité de structure cristalline, de celle de la mullite à celle de l'élément céramique, et à l'élément métallique par une couche intermédiaire contenant de la mullite, de la silice et un aluminiure de nickel et/ou de cobalt, à des concentrations qui varient progressivement entre la couche médiane et l'élément métallique.

- On forme le revêtement par pulvérisation cathodique.

La poudre est utilisable entre autres pour former sur un carter de turbomachine un revêtement d'étanchéité abradable par des aubes tournantes.

Dans le procédé selon l'invention, l'élément modificateur est déposé le plus souvent sur une poudre de MCrAlY ou de CrAlY(Ta), à partir d'un bain de dépôt chimique contenant des ions de cet élément. On peut partir par exemple d'une poudre AMDRY 997 ou d'une poudre AMDRY 995. En variante, on peut partir d'une poudre exempte de Ni et de Co et déposer l'un et/ou l'autre de ceux-ci lors d'une étape complémentaire qui précède ou qui suit l'étape de dépôt de l'élément modificateur, ce qui permet d'obtenir une poudre dont la composition est adaptée à celle de l'alliage à protéger.

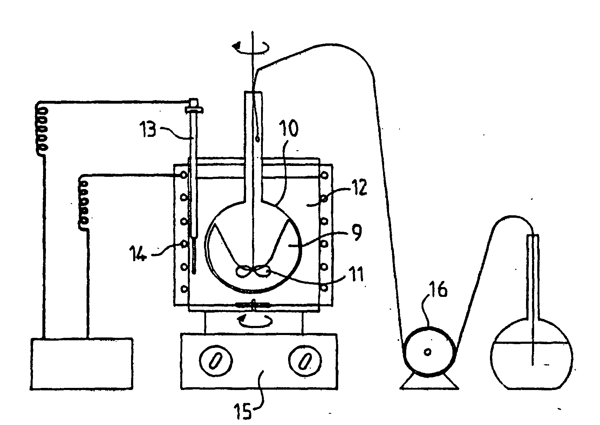

La figure unique annexée montre un dispositif utilisable avantageusement pour la ou les étapes de dépôt. Une suspension 9 de la poudre à traiter dans la solution de dépôt est placée dans un réacteur de forme sphérique (ballon à col), indiqué par la référence 10. L'agitation y est assurée par une hélice 11 pouvant tourner à grande vitesse (jusqu'à 800 tours par minute). Le chauffage est assuré par un bain-marie 12. Le fluide caloporteur utilisé est de l'eau chauffée par effet Joule à une température de 80 °C régulée à l'aide d'un thermomètre à contact 13 qui commande une résistance chauffante 14. Le bain-marie est agité au moyen d'un agitateur magnétique 15. Ce système permet d'avoir un vortex d'agitation homogène et une bonne agitation de l'ensemble bain + poudres à traiter. De plus, le confinement de l'atmosphère au-dessus du bain limite la carbonatation de ce dernier.

Le système est complété par une pompe péristaltique 16 permettant une alimentation en continu de réducteur, la concentration de ce dernier étant sensiblement nulle.

Le bain de dépôt de l'élément modificateur est d'une composition appropriée en fonction de la nature de cet élément.

Par exemple, lorsque l'élément modificateur est choisi parmi le platine et le palladium, on peut employer un bain fortement basique utilisant de l'éthylènediamine comme complexant, au moins un stabilisant et de l'hydrazine comme réducteur.

Dans le cas du palladium, il peut s'agir plus particulièrement d'un bain aqueux chimique autocatalytique de pH compris entre 8,5 et 14, dont les espèces dissoutes, réducteur excepté, ont la composition suivante en moles/litre:

| ions palladium | 0,01 à 0,3 |
|---|---|
| ions chlorure | 0,01 à 0,5 |
| éthylènediamine | 1 à 4 |
| pentoxyde d'arsenic | $10^{-4}$ à $10^{-2}$ |
| ou sulfate de cuivre | $10^{-5}$ à $10^{-3}$ |
| ou iodate de potassium | $10^{-6}$ à $10^{-3}$ |
| imidazole | 0,2 à 0,6, |

la quantité d'éthylènediamine étant suffisante pour complexer la totalité des ions palladium et pour se combiner en outre aux ions chlorure en évitant la présence d'ions chlorure libres au voisinage des particules à revêtir.

On trouvera plus de détails sur la composition et l'utilisation de ces bains dans FR 2 652 822 A et FR 2 652 823 A.

Le rhénium peut être déposé à partir d'un complexe oxalate-Re$^{+II}$.

Dans l'étape complémentaire éventuelle, on utilise avantageusement un bain contenant de l'hydroxyde de nickel-II tri(éthylènediamine) et/ou de l'hydroxyde de cobalt-II tri(éthylè-nediamine) et au moins un stabilisant, l'éthylènediamine jouant le rôle de complexant, et dans lequel de l'hydrazine est introduite progressivement comme réducteur. Il s'agit d'un bain de dépôt de nickel et/ou de cobalt pur autocatalytique décrit dans FR 2 590 595 A.

La poudre revêtue peut être utilisée pour une projection plasma selon les techniques connues. Lorsqu'une étape complémentaire suit l'étape de dépôt de l'élément modificateur, il convient d'effectuer la projection en atmosphère contrôlée pour éviter l'oxydation des métaux déposés.

Outre la conservation de l'effet aluminoformeur de la phase β-NiAl jusqu'à des basses teneurs en aluminium, l'invention conduit à un double ancrage dans le revêtement protecteur de la couche céramique formée sur ce dernier par oxydation à chaud, grâce à la présence simultanée d'yttrium et de l'élément modificateur.

La poudre revêtue en une seule étape peut également être utilisée pour réaliser un dépôt par électrophorèse sur le substrat à revêtir. Ce dépôt peut ensuite être consolidé, soit par une aluminisation, soit par un dépôt électrolytique suivi d'un recuit, soit par la fusion d'une poudre de composition appropriée.

Le dépôt électrophorétique s'effectue typiquement dans un milieu contenant de l'alcool éthylique et de la caséine. Après séchage la poudre déposée adhère au substrat car elle est collée de manière connue par la caséine. Ce dépôt est poreux et n'offre aucune tenue mécanique. On peut le densifier en déposant en phase vapeur de l'aluminium, pour obtenir un NiCoCrAlYTa modifié. On peut aussi le densifier en déposant à sa surface du nickel pur ou du cobalt pur ou un alliage nickel-cobalt par réduction d'un sel par de l'hydrazine, comme décrit dans FR 2 590 595 A précité, ce dépôt étant suivi d'un recuit de diffusion à haute température (8 heures à 1100 °C, par exemple). Dans ce cas il conviendra d'adapter, le cas échéant, la composition de la poudre de MCrAlY utilisée.

Le revêtement de la poudre destinée au dépôt électrophorétique peut également être un revêtement composite obtenu en mettant en suspension dans la solution de dépôt, avec la poudre à revêtir, des particules qui seront incluses dans le revêtement. L'élément modificateur peut alors être contenu dans les particules, par exemple sous forme d'un siliciure tel que PdSi, et/ ou dans la solution comme déjà décrit. Dans le cas où l'élément modificateur est contenu seulement dans les particules, la solution de dépôt peut contenir des ions nickel et/ou cobalt, un composé d'un élément fondant choisi parmi le bore et le phosphore y étant introduit progressivement en tant que réducteur, pour obtenir un dépôt dont la matrice contient du nickel et/ou du cobalt combiné à l'élément fondant.

Dans ce dernier cas, la solution de dépôt contient avantageusement en outre au moins un complexant desdits ions nickel et/ou cobalt et au moins un stabilisant organique soluble dans l'eau ne contenant ni soufre ni aucun métal ou métalloïde des groupes IIIa (bore et aluminium exceptés), IVa (carbone excepté), Va (azote et phosphore exceptés), VIa (oxygène excepté) et VIIa (fluor et chlore exceptés), et possédant un doublet électronique pouvant être facilement capté par le nickel et/ou le cobalt. De telles solutions sont décrites dans FR 2 531 103 A.

Le dépôt électrophorétique de la poudre munie d'un revêtement composite, réalisé comme décrit ci-dessus, est poreux et n'offre aucune tenue mécanique. On peut le soumettre à un recuit sous atmosphère neutre ou réductrice qui, dans un premier temps, assurera la fusion du dépôt composite à la surface des grains de MCrAlY(Ta) en densifiant le revêtement, et, dans un deuxième temps, homogénéisera par diffusion le revêtement obtenu. On obtient ainsi un revêtement de MCrAlYTa modifié, contenant du silicium qui doit favoriser l'adhérence d'une barrière thermique. L'utilisation d'une atmosphère réductrice (hydrogène, par exemple) est obligatoire dans le cas d'un enrobage des grains de poudre de CoCrAlY par un dépôt composite de nickel bore + siliciure d'un métal précieux car cela permet d'éliminer le bore après fusion de la brasure. Cette technique permet en outre de faire varier la composition soit en continu soit par dépôts successifs, chaque dépôt ayant une composition chimique propre (métal pur, alliage voire poudre céramique dense ou creuse). On obtient alors, soit un revêtement possédant un gradient de composition indépendant des chemins de diffusion, soit un système multicouches.

On notera que les techniques proposées permettent l'enrobage de chaque grain de poudre ce qui les différencie d'un éventuel ajout d'un métal modificateur de la phase β par des procédés métallurgiques (coulée d'un lingot de composition appropriée suivie d'une pulvérisation).

Selon un autre aspect de l'invention, on utilise des poudres de MCrAlY modifié préfrittées sous forme de plaques pour former un revêtement par brasage sur un substrat.

On prépare une série de poudres de compositions différentes, contenant un ou plusieurs fondants (B, P, Si), comme décrit plus haut. Les différentes nuances sont préfrittées en plaques, par exemple par un traitement thermique de 5 minutes à la température de fusion du composant dont le point de fusion est le plus bas. Les plaques obtenues sont superposées et collées entre elles par un film transfert. Ce même type de colle servira à coller l'ensemble des plaques à la surface du substrat à revêtir. Après un traitement thermique de diffusion (5 heures sous atmosphère contrôlée ou réductrice à 1100 °C, par exemple), une interdiffusion entre les différentes couches de revêtement et le substrat aura eu lieu. Le choix d'une atmosphère réductrice permet d'éliminer les résidus de carbone dus à la pyrolyse des films de colle.

La présence de Si dans la couche extérieure améliore l'adhérence de la couche éventuelle de zircone yttriée. Les borures, nécessaires pour fabriquer les plaques préfrittées et/ou ajouter des éléments favorables à la tenue en oxydation à haute température, sont éliminés au moins en grande partie par diffusion dans le substrat. Une grande flexibilité de composition est offerte, permettant d'obtenir, par exemple, un β-(Ni,Pt)Al collé au substrat et surmonté d'un MCrAlY modifié par un métal de la mine du platine).

Les plaques superposées peuvent être remplacées par une plaque unique formée à partir d'une seule poudre.

La poudre selon l'invention peut également être utilisée pour préparer une source massive servant elle-même à former le revêtement par une technique de dépôt physique en phase vapeur, par exemple par évaporation sous faisceau d'électrons ou par pulvérisation cathodique.

En particulier, on peut fabriquer par fusion de la poudre un barreau de MCrAlYTa modifié destiné à être évaporé sous faisceau d'électrons. Ce barreau métallique peut en outre être assemblé à un élément céramique par un ciment de scellement comportant une couche médiane de mùllite reliée à l'élément céramique par une couche de transition dont la composition chimique évolue progressivement, avec continuité de structure cristalline, de celle de la mullite à celle de l'élément céramique, et à l'élément métallique par une couche intermédiaire contenant de la mullite, de la silice et un aluminiure de nickel et/ou de cobalt, à des concentrations qui varient progressivement entre la couche médiane et l'élément métallique. Un tel ensemble et son mode d'obtention sont décrits dans FR 2 720 392 A.

La technique d'évaporation sous faisceau d'électrons permet de fabriquer des sous-couches de barrière thermique.

Une plaque ou un tube peut être fabriqué de manière analogue au barreau ci-dessus et servir de cible pour des dépôts par pulvérisation cathodique diode ou triode (PVD, PCT ou magnétron).

Comme on l'a vu, certaines techniques permettent d'obtenir à partir des poudres selon l'invention des revêtement poreux nécessitant un traitement de consolidation. En fonction du degré de consolidation, on peut alors aboutir à un revêtement abradable servant notamment de revêtement d'étanchéité pour un carter de turbomachine et dont l'épaisseur sera ajustée en fonctionnement par le frottement des aubes tournantes.

**Revendications**

1. Procédé pour produire une poudre d'un alliage métallique contenant du nickel et/ou du cobalt, du chrome, de l'aluminium et de l'yttrium sous forme d'une phase γ et d'une phase β dispersée dans la phase γ, propre à former à partir de la phase β, par exposition à l'air à température élevée, une barrière superficielle adhérente d'alumine, **caractérisé en ce qu'**il comprend l'étape consistant à réaliser, sur une poudre d'un alliage précurseur contenant au moins les éléments Cr, Al et Y, en utilisant un bain de dépôt chimique ou électrolytique, un dépôt contenant au moins un élément modificateur propre à étendre le domaine d'existence de ladite phase β et/ou à augmenter la finesse de sa dispersion, choisi parmi le platine, le palladium, le ruthénium, le rhodium, l'osmium, l'iridium, le fer, le manganèse et le rhénium.

2. Procédé selon la revendication 1, **caractérisé en ce que** ledit bain est un bain chimique autocatalytique contenant des ions oxalate, des ions de l'élément modificateur et un complexant de ces derniers.

3. Procédé selon la revendication 2, **caractérisé en ce que** l'élément modificateur est choisi parmi le platine et le palladium, que ledit complexant est l'éthylènediamine et que le bain est fortement basique et contient en outre au moins un stabilisant, de l'hydrazine y étant introduite progressivement comme réducteur.

4. Procédé selon la revendication 3, **caractérisé en ce que** ledit bain est un bain aqueux chimique autocatalytique de pH compris entre 8,5 et 14, dont les espèces dissoutes ont la composition initiale suivante en moles/litre:

| ions palladium | 0,01 à 0,3 |
|---|---|
| ions chlorure | 0,01 à 0,5 |
| éthylènediamine | 1 à 4 |
| pentoxyde d'arsenic | $10^{-4}$ à $10^{-2}$ |
| ou sulfate de cuivre | $10^{-5}$ à $10^{-3}$ |
| ou iodate de potassium | $10^{-6}$ à $10^{-3}$ |
| imidazole | 0,2 à 0,6, |

la quantité d'éthylènediamine étant suffisante pour complexer la totalité des ions palladium et pour se combiner en outre aux ions chlorure en évitant la présence d'ions chlorure libres au voisinage des particules à revêtir.

5. Procédé selon l'une des revendications précédentes, **caractérisé en ce que** l'élément modificateur est déposé, au moins en partie, sous forme de particules de cet élément ou d'un composé de celui-ci en suspension dans une solution de dépôt, lesdites particules étant incluses dans une matrice déposée à partir d'ions contenus dans la solution.

6. Procédé selon la revendication 5, **caractérisé en ce que** ledit composé est un siliciure.

7. Procédé selon l'une des revendications 5 et 6, **ca-**

ractérisé en ce que la solution de dépôt contient des ions nickel et/ou cobalt, un composé d'un élément fondant choisi parmi le bore et le phosphore y étant introduit progressivement en tant que réducteur, et que la matrice contient du nickel et/ou du cobalt combiné à l'élément fondant.

8. Procédé selon la revendication 7, **caractérisé en ce que** la solution de dépôt contient en outre au moins un complexant desdits ions nickel et/ou cobalt et au moins un stabilisant organique soluble dans l'eau ne contenant ni soufre ni aucun métal ou métalloïde des groupes IIIa (bore et aluminium exceptés), IVa (carbone excepté), Va (azote et phosphore exceptés), VIa (oxygène excepté) et VIIa (fluor et chlore exceptés), et possédant un doublet électronique pouvant être facilement capté par le nickel et/ou le cobalt.

9. Procédé selon l'une des revendications précédentes, **caractérisé en ce que** l'étape de dépôt de l'élément modificateur est précédée ou suivie par une étape complémentaire consistant à déposer du nickel et/ou du cobalt sur une poudre contenant au moins les éléments Cr, Al et Y, à partir d'un bain de dépôt autocatalytique contenant des ions nickel et/ou cobalt, la poudre résultant de la première desdites étapes servant de substrat pour la seconde étape.

10. Procédé selon la revendication 9, **caractérisé en ce que**, dans l'étape complémentaire, ledit bain contient de l'hydroxyde de nickel-II tri(éthylènediamine) et/ou de l'hydroxyde de cobalt-II tri(éthylènediamine) et au moins un stabilisant, l'éthylènediamine jouant le rôle de complexant et de l'hydrazine y étant introduite progressivement comme réducteur.

11. Procédé selon l'une des revendications précédentes, **caractérisé en ce que**, dans l'étape de dépôt de l'élément modificateur et le cas échéant dans l'étape complémentaire, on met la poudre à traiter en suspension, avec agitation, dans le bain de dépôt.

12. Procédé selon la revendication 11, **caractérisé en ce que** la suspension agitée (9) est contenue dans un récipient (10) dont la paroi en contact avec elle est sensiblement sphérique.

13. Poudre d'alliage métallique telle qu'on peut l'obtenir par le procédé selon l'une des revendications précédentes, contenant du nickel et/ou du cobalt, du chrome, de l'aluminium et de l'yttrium sous forme d'une phase $\gamma$ et d'une phase $\beta$ dispersée dans la phase $\gamma$, propre à former à partir de la phase $\beta$, par exposition à l'air à température élevée, une barrière superficielle adhérente d'alumine, et contenant en outre au moins un élément modificateur propre à étendre le domaine d'existence de ladite phase $\beta$ et/ou à augmenter la finesse de sa dispersion, choisi parmi le platine, le palladium, le ruthénium, le rhodium, l'osmium, l'iridium, le fer, le manganèse et le rhénium.

14. Utilisation d'une poudre selon la revendication 13 pour former sur un substrat métallique un revêtement à base dudit alliage.

15. Utilisation selon la revendication 14, **caractérisée en ce qu'**on fait fondre les grains de ladite poudre, et qu'on projette les gouttelettes résultantes sur le substrat pour former le revêtement, au moyen d'une torche à plasma.

16. Utilisation selon la revendication 14, **caractérisée en ce qu'**on forme ledit revêtement par électrophorèse dans un milieu contenant ladite poudre en suspension et contenant un agent d'adhésion propre à permettre l'agglomération des grains de poudre déposés sur le substrat, après quoi on effectue un traitement de consolidation du revêtement.

17. Utilisation selon la revendication 16 d'une poudre obtenue par le procédé selon la revendication 7, **caractérisée en ce que** ledit traitement de consolidation comporte la fusion du dépôt composite présent sur les grains de poudre.

18. Utilisation selon 1a revendication 14 d'une poudre obtenue par le procédé selon la revendication 7, **caractérisée en ce qu'**on forme au moins une plaque en préfrittant ladite poudre, par fusion du dépôt composite présent sur les grains de poudre, on applique ladite plaque sur ledit substrat avec interposition d'une couche de colle et on effectue un traitement thermique de diffusion entre le revêtement et le substrat.

19. Utilisation selon la revendication 18, **caractérisée en ce qu'**on forme au moins deux plaques en préfrittant des poudres ayant des compositions différentes d'une plaque à l'autre, et on superpose lesdites plaques entre elles et sur ledit substrat avec interposition de couches de colle, pour obtenir après ledit traitement thermique de diffusion un revêtement présentant un gradient de composition.

20. Utilisation selon la revendication 14, **caractérisée en ce qu'**on forme ledit revêtement par une technique de dépôt physique en phase vapeur à partir d'une source elle-même obtenue par liaison des grains de ladite poudre.

21. Utilisation selon la revendication 20, **caractérisée**

en ce qu'on forme le revêtement par évaporation sous faisceau d'électrons.

22. Utilisation selon la revendication 21, **caractérisée en ce que** ladite source comprend, outre l'alliage constitutif de la poudre, un élément céramique assemblé à l'élément métallique par un ciment de scellement comportant une couche médiane de mullite reliée à l'élément céramique par une couche de transition dont la composition chimique évolue progressivement, avec continuité de structure cristalline, de celle de la mullite à celle de l'élément céramique, et à l'élément métallique par une couche intermédiaire contenant de la mullite, de la silice et un aluminiure de nickel et/ou de cobalt, à des concentrations qui varient progressivement entre la couche médiane et l'élément métallique.

23. Utilisation selon la revendication 20, **caractérisée en ce qu'**on forme le revêtement par pulvérisation cathodique.

24. Utilisation selon l'une des revendications 14 à 23 pour former sur un carter de turbomachine un revêtement d'étanchéité abradable par des aubes tournantes.

**Claims**

1. Method for producing a metal alloy powder containing nickel and/or cobalt, chromium, aluminium and yttrium in the form of a $\gamma$ phase and a $\beta$ phase dispersed in the $\gamma$ phase able to form from the $\beta$ phase an adherent surface barrier of alumina by exposure to air at high temperature, **characterized in that** it comprises the step consisting of producing, on a powder of a precursor alloy containing at least the elements Cr, Al and Y, using a chemical or electrolytic deposition bath, a deposit containing at least one modifying element capable of extending the range of existence of the said $\beta$ phase and/or of increasing the fineness of its dispersion, chosen from platinum, palladium, ruthenium, rhodium, osmium, iridium, iron, manganese and rhenium.

2. Method according to claim 1, **characterized in that** the said bath is an autocatalytic chemical bath containing oxalate ions, ions of the modifying element and a complexing agent for these.

3. Method according to claim 2, **characterized in that** the modifying element is chosen from platinum and palladium, **in that** the said complexing agent is ethylenediamine and **in that** the bath is strongly basic and additionally contains at least one stabilizer, hydrazine being introduced progressively as a reducing agent.

4. Method according to claim 3, **characterized in that** the said bath is an aqueous autocatalytic chemical bath with a pH of between 8.5 and 14, of which the dissolved species have the following initial composition in moles/litre:

| | |
|---|---|
| palladium ions | 0.01 to 0.3 |
| chloride ions | 0.01 to 0.5 |
| ethylenediamine | 1 to 4 |
| arsenic pentoxide | $10^{-4}$ to $10^{-2}$ |
| or copper sulphate | $10^{-5}$ to $10^{-3}$ |
| or potassium iodate | $10^{-6}$ to $10^{-3}$ |
| imidazole | 0.2 to 0.6, |

the quantity of ethylenediamine being sufficient to complex all the palladium ions and additionally to combine with the chloride ions while preventing the presence of free chloride ions in the vicinity of the particles to be coated.

5. Method according to one of the preceding claims, **characterized in that** the modifying element is deposited, at least partially, in the form of particles of this element or of a compound thereof in suspension in a deposition solution, the said particles being included in a matrix deposited from the ions contained in the solution.

6. Method according to claim 5, **characterized in that** the said compound is a silicide.

7. Method according to either of claims 5 or 6, **characterized in that** the deposition solution contains nickel and/or cobalt ions, a compound of a melting element chosen from boron and phosphorous being introduced progressively as a reducing agent, and **in that** the matrix contains nickel and/or cobalt combined with the melting element.

8. Method according to claim 7, **characterized in that** the deposition solution additionally contains at least one complexing agent for the said nickel and/or cobalt ions and at least one soluble organic stabilizing agent in water containing neither sulphur nor any metal or metalloid of groups IIIa (except boron and aluminium), IVa (except carbon), Va (except nitrogen and phosphorus), VIa (except oxygen) and VIIa (except fluorine and chlorine), and possessing an electron doublet that can be easily captured by nickel and/or cobalt.

9. Method according to one of the preceding claims, **characterized in that** the step for depositing the modifying element is preceded or followed by a complementary step consisting of depositing nickel and/or cobalt on a powder containing at least the elements Cr, Al and Y, from an autocatalytic deposition bath containing nickel and/or cobalt ions, the powder resulting from the first of the said steps serving as a substrate for the second step.

10. Method according to claim 9, **characterized in that**, in the complementary step, the said bath contains tri(ethylenediamine)-nickel II hydroxide and/or tri(ethylenediamine)-cobalt II hydroxide and at least one stabilizing agent, ethylenediamine acting as a complexing agent and hydrazine being introduced progressively as a reducing agent.

11. Method according to one of the preceding claims, **characterized in that**, in the step of depositing the modifying element and as the case may be in the complementary step, the powder to be treated is suspended with agitation, in the deposition bath.

12. Method according to claim 11, **characterized in that** the agitated suspension (9) is contained in a receptacle (10) of which the wall in contact with it is substantially spherical.

13. Metal alloy powder such as may be obtained by the method according to one of the preceding claims, containing nickel and/or cobalt, chromium, aluminium and yttrium in the form of a $\gamma$ phase and a $\beta$ phase dispersed in the $\gamma$ phase, capable of forming from the $\beta$ phase an adherent surface barrier of alumina by exposure to air at high temperature, and additionally containing at least one modifying element capable of extending the range of existence of the said $\beta$ phase and/or of increasing the fineness of its dispersion, chosen from platinum, palladium, ruthenium, rhodium, osmium, iridium, iron, manganese and rhenium.

14. Use of a powder according to claim 13 for forming a coating based on the said alloy on a metal substrate.

15. Use according to claim 14, **characterized in that** the particles of the said powder are melted and that the resulting droplets are sprayed onto the substrate so as to form the coating, by means of a plasma torch.

16. Use according to claim 14, **characterized in that** the said coating is formed by electrophoresis in a medium containing the said powder in suspension and containing an adhesion agent capable of enabling the particles of powder deposited on the substrate to agglomerate, after which a consolidation treatment of the coating is carried out.

17. Use according to claim 16 of a powder obtained by the method according to claim 7, **characterized in that** the said consolidation treatment comprises the fusion of the composite deposit present on the powder particles.

18. Use according to claim 14 of a powder obtained by the method according to claim 7, **characterized in that** at least one plate is formed by pre-sintering the said powder by melting the composite deposit present on the particles of powder, that the said plate is applied to the said substrate with the interposition of a layer of adhesive and that a diffusion heat treatment is carried out between the coating and the substrate.

19. Use according to claim 18, **characterized in that** at least two plates are formed by pre-sintering powders having different compositions from one plate to the other, and that the said plates are superimposed on each other and on the said substrate with the interposition of layers of adhesive, so as to obtain, after the said diffusion heat treatment, a coating having a composition gradient.

20. Use according to claim 14, **characterized in that** the said coating is formed by a physical deposition technique in the vapour phase from a source that is itself obtained by bonding the particles of the said powder.

21. Use according to claim 20, **characterized in that** the coating is formed by evaporation under a beam of electrons.

22. Use according to claim 21, **characterized in that** the said source includes, apart from the alloy constituting the powder, a ceramic element assembled to the metal element by a sealing cement comprising a middle layer of mullite bonded to the ceramic element by a transition layer of which the chemical composition changes progressively, with continuity of the crystalline structure, from that of mullite to that of the ceramic element, and to the metal element by an intermediate layer containing mullite, silica and an aluminide of nickel and/or cobalt, in concentrations which vary progressively between the middle layer and the metal element.

23. Use according to claim 20, **characterized in that** the coating is formed by cathode sputtering.

24. Use according to one of claims 14 to 23 for forming on a turbo-engine casing a sealing coating that is abradable by rotating blades.

**Patentansprüche**

1. Verfahren zur Herstellung eines Metalllegierungspulvers, das Nickel und/oder Kobalt, Chrom, Aluminium und Yttrium in Form einer γ-Phase und einer in der γ-Phase dispergierten β-Phase enthält, aus dem, ausgehend von der β-Phase, durch Einwirkenlassen von Luft bei erhöhter Temperatur eine haftende Oberflächen-Sperrschicht aus Aluminiumoxid hergestellt werden kann, **dadurch gekennzeichnet, dass** es eine Stufe umfasst, die darin besteht, dass auf einem Vorläufer-Legierungspulver, das mindestens die Elemente Cr, Al und Y enthält, unter Verwendung eines chemischen oder elektrolytischen Abscheidungsbades ein Überzug hergestellt wird, der mindestens ein Modifikator-Element enthält, welches das vorhandene Gebiet der β-Phase erweitern und/oder die Feinheit ihrer Dispersion erhöhen kann, das ausgewählt wird aus der Gruppe Platin, Palladium, Ruthenium, Rhodium, Osmium, Iridium, Eisen, Mangan und Rhenium.

2. Verfahren nach Anspruch 1, **dadurch gekennzeichnet, dass** das Bad ein autokatalytisches chemisches Bad ist, das Oxalat-Ionen, Ionen des Modifikator-Elements und einen Komplexbildner für letztere enthält.

3. Verfahren nach Anspruch 2, **dadurch gekennzeichnet, dass** das Modifikator-Element ausgewählt wird aus Platin und Palladium, dass der Komplexbildner Ethylendiamin ist und dass das Bad stark basisch ist und außerdem mindestens ein Stabilisierungsmittel und Hydrazin enthält, das als Reduktionsmittel portionsweise eingeführt wird.

4. Verfahren nach Anspruch 3, **dadurch gekennzeichnet, dass** das Bad ein autokatalytisches chemisches wässriges Bad mit einem pH-Wert zwischen 8,5 und 14 ist, dessen gelöste Stoffe die nachstehend angegebene anfängliche Zusammensetzung in Mol/ℓ haben:

| Palladiumionen | 0,01 bis 0,3 |
|---|---|
| Chloridionen | 0,01 bis 0,5 |
| Ethylendiamin | 1 bis 4 |
| Arsenpentoxid | $10^{-4}$ bis $10^{-2}$ |
| oder Kupfersulfat | $10^{-5}$ bis $10^{-3}$ |
| oder Kaliumiodat | $10^{-6}$ bis $10^{-3}$ |
| Imidazol | 0,2 bis 0,6, |

wobei die Ethylendiaminmenge ausreicht, um die Gesamtheit der Palladiumionen komplex zu binden und sich außerdem mit den Chloridionen zu verbinden zur Vermeidung des Vorliegens von freien Chloridionen in der Umgebung der zu beschichtenden Teilchen.

5. Verfahren nach einem der vorhergehenden Ansprüche, **dadurch gekennzeichnet, dass** das Modifikator-Element mindestens teilweise in Form von Teilchen dieses Elements oder einer Verbindung desselben, suspendiert in einer Abscheidungslösung, abgeschieden wird, wobei die Teilchen in einer Matrix eingeschlossen sind, die aus Ionen, die in der Lösung enthalten sind, abgeschieden wurde.

6. Verfahren nach Anspruch 5, **dadurch gekennzeichnet, dass** die Verbindung ein Silicid ist.

7. Verfahren nach einem der Ansprüche 5 und 6, **dadurch gekennzeichnet, dass** die Abscheidungslösung Nickel- und/oder Kobaltionen, eine Verbindung eines Zuschlgselements, ausgewählt aus Bor und Phosphor, das als Reduktionsmittel portionsweise eingeführt wird, enthält, und dass die Matrix Nickel und/oder Kobalt, kombiniert mit dem Zuschlagselement, enthält.

8. Verfahren nach Anspruch 7, **dadurch gekennzeichnet, dass** die Abscheidungslösung außer mindestens einem Komplexbildner für die Nickel-und/oder Kobaltionen und mindestens einem in Wasser löslichen organischen Stabilisierungsmittel weder Schwefel noch irgendein Metall oder Metalloid der Gruppen IIIa (mit Ausnahme von Bor und Aluminium), IVa (mit Ausnahme von Kohlenstoff), Va (mit Ausnahme von Stickstoff und Phosphor), VIa (mit Ausnahme von Sauerstoff) und VIIa (mit Ausnahme von Fluor und Chlor) enthält und ein Elektronendublett aufweist, das von Nickel und/oder Kobalt leicht eingefangen werden kann.

9. Verfahren nach einem der vorhergehenden Ansprüche, **dadurch gekennzeichnet, dass** der Stufe der Abscheidung des Modifikator-Elements eine komptementäre Stufe vorausgeht oder nachfolgt, die darin besteht, dass Nickel und/oder Kobalt auf einem Pulver abgeschieden wird (werden), das mindestens die Elemente Cr, Al und Y enthält, wobei man von einem autokatalytischen Abscheidungsbad ausgeht, das Nickel- und/oder Kobaltionen enthält, wobei das in der ersten der genannten Stufen erhaltene Pulver als Substrat für die zweite Stufe dient.

10. Verfahren nach Anspruch 9, **dadurch gekennzeichnet, dass** in der komplementären Stufe das Bad Nickel-(ii)-tri(ethylendiamin)-hydroxid und/oder Kobalt-(II)-tri(ethylendiamin)-hydroxid und mindestens ein Stabilisierungsmittel enthält, wobei das Ethylendiamin die Rolle eins Komplexbildners spielt und das Hydrazin als Reduktionsmittel portionsweise eingeführt wird.

11. Verfahren nach einem der vorhergehenden Ansprüche, **dadurch gekennzeichnet, dass** in der Stufe der Abscheidung des Modifikator-Elements und gegebenenfalls in der komplementären Stufe das zu behandelnde Pulver unter Rühren in dem Abscheidungsbad suspendiert wird.

12. Verfahren nach Anspruch 11, **dadurch gekennzeichnet, dass** die gerührte Suspension (9) in einem Behälter (10) enthalten ist, dessen damit in Kontakt stehende Wand im wesentlichen kugelförmig ist.

13. Metalllegierungspulver, wie es nach dem Verfahren nach einem der vorhergehenden Ansprüche erhältlich ist, das Nickel und/oder Kobalt, Chrom, Aluminium und Yttrium in Form einer γ-Phase und einer in der γ-Phase dispergierten β-Phase enthält, aus dem, ausgehend von der β-Phase, durch Einwirkenlassen von Luft bei erhöhter Temperatur eine haftende Oberflächensperrschicht aus Aluminiumoxid hergestellt werden kann und das außerdem mindestens ein Modifikator-Element enthält, welches das vorhandene Gebiet der β-Phase ausdehnen kann und/oder die Feinheit ihrer Dispersion erhöhen kann, ausgewählt aus Platin, Palladium, Ruthenium, Rhodium, Osmium, Iridium, Eisen, Mangan und Rhenium.

14. Verwendung eines Pulvers nach Anspruch 13 zur Bildung eines Überzugs auf Basis der genannten Legierung auf einem Metallsubstrat.

15. Verwendung nach Anspruch 14, **dadurch gekennzeichnet, dass** man die Körner des Pulvers schmelzen lässt und die resultierenden Tröpfchen auf das Substrat mittels eines Plasmabrenners aufspritzt zur Bildung des Überzugs.

16. Verwendung nach Anspruch 14, **dadurch gekennzeichnet, dass** man den Überzug durch Elektrophorese in einem Medium herstellt, der das Pulver in Form einer Suspension enthält und einen Haftvermittler enthält, der die Agglomeration der auf dem Substrat abgeschiedenen Pulverkörnchen erlaubt, wonach man eine Behandlung zur Konsolidierung des Überzugs durchführt.

17. Verwendung nach Anspruch 16 eines Pulvers, das nach dem Verfahren nach Anspruch 7 erhalten worden ist, **dadurch gekennzeichnet, dass** die Konsolidierungs-Behandlung das Schmelzen des auf den Pulverkörnchen vorhandenen zusammengesetzten Überzugs umfasst.

18. Verwendung nach Anspruch 14 eines Pulvers, das nach dem Verfahren nach Anspruch 7 erhalten worden ist, **dadurch gekennzeichnet, dass** man mindestens eine Platte herstellt durch Vorsintem des Pulvers durch Schmelzen des auf den Pulverkörnchen vorhandenen Verbundüberzugs, dass man diese Platte auf das Substrat unter Verwendung einer Klebstoff Zwischenschicht aufbringt und eine Behandlung zur thermischen Diffusion zwischen dem Überzug und dem Substrat durchführt.

19. Verwendung nach Anspruch 18, **dadurch gekennzeichnet, dass** man mindestens zwei Platten herstellt durch Vorsintem von Pulvern, die von Platte zu Platte unterschiedliche Zusammensetzungen haben, und dass man diese Platten und das Substrat aufeinanderlegt mit einer Klebstoffschicht zwischen den Platten und auf dem Substrat, sodass man nach der thermischen Diffusionsbehandlung einen Überzug erhält, der einen Zusammensetzungsgradienten aufweist.

20. Verwendung nach Anspruch 14, **dadurch gekennzeichnet, dass** man den Überzug unter Anwendung eines physikalischen Gasphasenabscheidungsverfahrens herstellt, wobei man von einer Quelle ausgeht, die selbst durch Verbinden der Körnchen des Pulvers erhalten worden ist.

21. Verwendung nach Anspruch 20, **dadurch gekennzeichnet, dass** man den Überzug durch Verdampfung unter der Einwirkung von Elektronenstrahlen herstellt.

22. Verwendung nach Anspruch 21, **dadurch gekennzeichnet, dass** die genannte Quelle außer der Legierung, die das Pulver aufbaut, ein Keramikelement umfasst, das mit dem Metallelement durch einen Versiegelungszement verbunden ist, der eine Mittelschicht aus Mullit umfasst, die verbunden ist mit dem Keramikelement über eine Übergangsschicht, deren chemische Zusammensetzung sich allmählich kontinuierlich ändert von einer kristallinen Struktur, derjenigen des Mullits, zu derjenigen des Keramikelements, und mit dem Metallelement über eine Zwischenschicht, die Mullit, Siliciumdioxid und ein Nickel- und/oder Kobaltaluminid in Konzentrationen enthält, die zwischen der Mittelschicht und der Metallschicht progressiv variieren.

23. Verwendung nach Anspruch 20, **dadurch gekennzeichnet, dass** man den Überzug durch Kathodenzerstäubung herstellt.

24. Verwendung nach einem der Ansprüche 14 bis 23 zur Herstellung eines durch sich drehende Schaufeln schleifbaren Abdichtungsüberzugs auf einem Turbinentriebwerk-Gehäuse.